# EUROPÄISCHE PATENTSCHRIFT

(11) **EP 2 386 378 B1**
(45) Veröffentlichungstag und Bekanntmachung des Hinweises auf die Patenterteilung: **22.10.2014**
(21) Anmeldenummer: 11003644.9
(22) Anmeldetag: 04.05.2011
(51) Int. Cl.: B23H 9/00, B23H 9/14, B23H 3/04, A61L 31/00

(54) **Fertigungsverfahren für medizintechnische Gefäßstützen**
Method for producing medical container supports
Procédé de fabrication de prothèses vasculaires médicales

(30) Priorität: 12.05.2010 DE 102010020329
(43) Veröffentlichungstag der Anmeldung: 16.11.2011
(73) Patentinhaber: Diehl Stiftung & Co. KG, 90478 Nürnberg (DE)
(72) Erfinder: Glasmacher, Mathias Dr., 68799 Reilingen (DE)
(74) Vertreter: Diehl Patentabteilung

(56) Entgegenhaltungen:
- WO-A1-02/06567
- US-A1- 2009 082 854

## Beschreibung

Die Erfindung betrifft ein Verfahren gemäß dem Oberbegriff des Hauptanspruches, wie es aus dem Beitrag von A. Ostendorf und B. Schöps "Neue Trends und Entwicklungen bei der Lasermikrostrukturierung am Beispiel von Stents" (Tagungsband LEF 2010 zu "Laser in der Elektronikproduktion & Feinwerktechnik", Meisenbach Bamberg 2010) als das Laserschneiden von filigranen Perforierungen in den Wandungen von Röhrchen-Implantaten, nachfolgend als Stent bezeichnet, bekannt ist.

Jener Beitrag lässt erkennen, dass die Auslegung der in die Röhrchenwandung eingebrachten Laserenergie zum Ausschneiden des Gittergerüstes kritisch ist, insbesondere hinsichtlich die Schnittkanten schädigender Wärmeeinflusszonen. In der fertigungstechnischen Praxis müssen deshalb die wärmebeeinflussten, und dadurch in ihrer Festigkeit herabgesetzten, Schnittkanten, samt Gratbildungen daran, eigens nachträglich unter Abrunden der dann verbleibenden Gitterverläufe entfernt werden; was angesichts der miniaturisierten Werkstücke und der feingliedrigen Wandungsgeometrie störanfällig und überaus arbeitsaufwändig ist. Hinzu kommt das Erfordernis, vom Laserschneiden auf der Röhrchenwandung verbliebene unerwünschte Ablagerungen wie Schlackespritzer eigens im Wege eines abschließenden elektrolytischen Anodenabtrags entfernen zu müssen.

Aus der WO 02/06567 A1 ist ein Verfahren zur Herstellung medizinischer Stents bekannt, bei welchem ein metallisches Röhrchen und eine zylinderförmige, auf ihrer Außenseite das gewünschte netzförmige Muster aufweisende Kathode in definiertem geringem Abstand voneinander simultan gegenläufig rotieren, wobei sich in dem schmalen Zwischenraum zwischen dem Röhrchen und der Kathode ein Elektrolyt befindet und während der simultanen Drehung von Röhrchen und Kathode ein elektrochemischer Umformprozess stattfindet. Bei diesem Verfahren muss, um eine gewünschte Qualität der so hergestellten Stents zu gewährleisten, sowohl auf ein exaktes Einhalten der Dicke des elektrolyt-gefüllten Spalts als auch eine exakte Synchronisierung der gegenläufigen Drehbewegungen geachtet werden. Darüber hinaus müssen natürlich auch die Drehgeschwindigkeit und die Spaltdicke exakt aufeinander abgestimmt sein.

Der vorliegenden Erfindung liegt die technische Problemstellung zugrunde, ein Verfahren gattungsgemäßer Art anzugeben, das kostengünstiger zu den hochpräzise geformten, dann unmittelbar einsatzfertigen solchen Gefäßstützen führt und womöglich sogar funktionale Verbesserungen daran eröffnet.

Diese Aufgabe ist nach vorliegender Erfindung gemäß den im Hauptanspruch angegebenen wesentlichen Merkmalen gelöst. Danach wird ein berührungsloses elektrochemisches Senkerodierverfahren mit einem kathodisch gepolten Stempel angewandt, der auf der Innenmantelfläche eines Hohlzylinder-Sektors eine erhabene Profilierung gemäß der Geometrie der in die elektrisch leitende, anodisch gepolte Röhrchenwandung einzubringenden Perforierungen trägt. Die Profilierung wird bis auf einen dann vom Elektrolyten durchströmten Arbeitsspalt an die Außenmantelfläche der anodisch gepolten Röhrchenwandung herangefahren, so dass in diesem Bearbeitungsabschnitt ein der Geometrie der Hohlstempel-Profilierung entsprechender Abtrag aus dem Material der Röhrchenwandung bis zu dessen Perforierung führt. Deren Geometrie entspricht, einschließlich vorgegebener Berandungsabrundungen, genau der vorgegebenen Stempelgeometrie, ohne dass dafür irgendwelche Druck- oder Wärmebeanspruchungen in die Röhrchenwandung eingeführt wurden.

Insbesondere wenn dieses elektrochemische Abtragen nach dem weiterentwickelten Precise Electrochemical Machining angewandt wird, führt das bei hoher Strukturgenauigkeit zu wirtschaftlich besonders interessanten, hohen Senkgeschwindigkeiten, also Abtragsraten.

Da der hohlzylindrische Stempel für solch ein elektrochemisches Senkverfahren mit seiner Profilierung im Wesentlichen orthogonal zur Oberfläche der Röhrchenwandung orientiert sein muss, erstreckt der Stempel sich über wesentlich weniger als 180° peripher um das Röhrchen herum. Dieses wird deshalb sukzessiv um wenigstens drei Teilwinkel relativ zum Hohlstempel verdreht, um das Muster der Perforierungen in entsprechend vielen aufeinanderfolgenden achsparallelen Zylinderabschnitten in die Röhrchenwandung einzubringen. Dabei ist dieser Verdrehwinkel vorzugshalber kleiner als der Sektorwinkel des Hohlstempels, damit infolge geringfügiger Überlappung der achsparallelen Bearbeitungsabschnitte peripher kontinuierliche Berandungen der Senkmuster sichergestellt sind.

Da der kathodische Stempel keine mechanische Abnutzung erfährt, ist eine gleichförmige Geometrie des Perforierungsmusters in der Röhrchenwandung über deren vollen Umfang trotz der abschnittweise erfolgenden Bearbeitung sichergestellt; weshalb die Stent-Gitterstruktur der Röhrchenwandung dann ohne Erfordernis von Nachbearbeitungen unmittelbar gebrauchsfertig ausgebildet ist.

Es kann sich auch mit dem selben Stempel wenigstens ein erneuter solcher Behandlungsablauf beim selben Röhrchen anschießen, der dann vorteilhafterweise um einen Teil des Sektorwinkels versetzt startet, um so die Geometrie der Wandungs-Perforierungen in den achsparallelen Überlappungsbereichen der vorangegangenen Bearbeitungsabschnitte nachzuarbeiten.

Darüber hinaus eröffnet dieses elektrochemische Fertigungsverfahren die technisch wie wirtschaftlich interessante Möglichkeit einer Kombination mit galvanischen Beschichtungen der bereits fertig strukturierten Röhrchenwandung. Wenn beispielsweise die Mantelfläche des Hohlstempels Magnesium aufweist, etwa damit beschichtet ist, führt, erforderlichenfalls nach Einbringen eines galvanischen Elektrolyten in den Arbeitsspalt, ein bloßes Umpolen der Elektroden auf einen anodischen Stempel dazu, dass sich hier abgeschiedenes Magnesium auf dem nun kathodischen Röhrchen als Schichtenaufbau niederschlägt. Ein solches Magnesium-Stent bietet im medizinischen Einsatz dann den Vorteil, dass die Lösungsrate im Blut verringert wird.

Zusätzliche Weiterbildungen und weitere Alternativen zur erfindungsgemäßen Lösung ergeben sich aus den weiteren Ansprüchen und, auch unter Berücksichtigung derer Vorteile, aus nachstehender Beschreibung einer unmaßstäblich vergrößerten Prinzipskizze zum Erläutern des erfindungsgemäßen Fertigungsvorganges. In der Zeichnung zeigt:
- Fig.1: im Querschnitt den mit seiner Profilierung in die Wandung des anodischen Stent-Röhrchens orthogonal eingesenkten Hohlstempel als kathodisches Abtragwerkzeug und
- Fig.2: die Verfahrenssituation gemäß Fig.1 im Längsschnitt.

Ein Stent 11 als medizintechnisches Implantat wird im berührungslosen elektrochemischen Erodierverfahren aus einem dünnwandigen, elektrisch leitenden Röhrchen 12 mittels eines dazu achsparallelen, orthogonal verfahrbaren Hohlstempels 13 geformt, der als elektrochemische Senkelektrode wirkt. Dafür weist der Hohlstempel 13 auf seiner Innenmantelfläche 14 eine erhabene Profilierung 15 auf, die durch Materialabtrag gitterartige Perforierungen 16 gleicher Querschnittsgeometrie in die Wandung 17 des Röhrchens 12 einbringt. Dessen Wandungsstärke ist höchstens gleich der radialen Höhe der Stempel-Profilierung 15. Der Krümmungsradius der Stempel-Innenmantelfläche 14 ist etwas größer als der Radius der Außenmantelfläche 18 des Röhrchens 12. Im Zuge des Eindringens der Profilierung 15 in die Röhrchen-Wandung 17 verbleibt stets ein geringer Arbeitsspalt 19 zwischen den einander zugewandten Flächen 18 und 14 mit seiner Profilierung 15.

Zum Einbringen der Perforierungen 16 wird der Arbeitsspalt 19, der unter einem Millimeter Stärke misst, von einer wässrigen Elektrolytströmung 20 durchsetzt, während das Röhrchen 12 als Elektrolyt-Anode an den positiven Pol 21 und der Hohlstempel 13 als Elektrolyt-Kathode an den negativen Pol 22 einer Starkstrom-Gleichspannungsquelle 23 niedriger Spannung (typisch in der Größenordnung von 15 Volt) angeschlossen ist. Im dadurch zwischen dem Röhrchen 12 und dem Hohlstempel 13 befindlichen elektrischen Feld bewegen sich die Elektrolytionen gemäß ihrer Ladung zur Anode bzw. zur Kathode, so dass - vereinfacht beschrieben - vom Röhrchen 12 stammende, unter Materialabtrag mit dem Elektrolyten reagierende Metallionen von der Elektrolytströmung 20 abgeführt werden, während der Hohlstempel 13 unter Wasserstoffbildung die verbrauchten Ionen in die Elektrolytströmung 20 nachliefert.

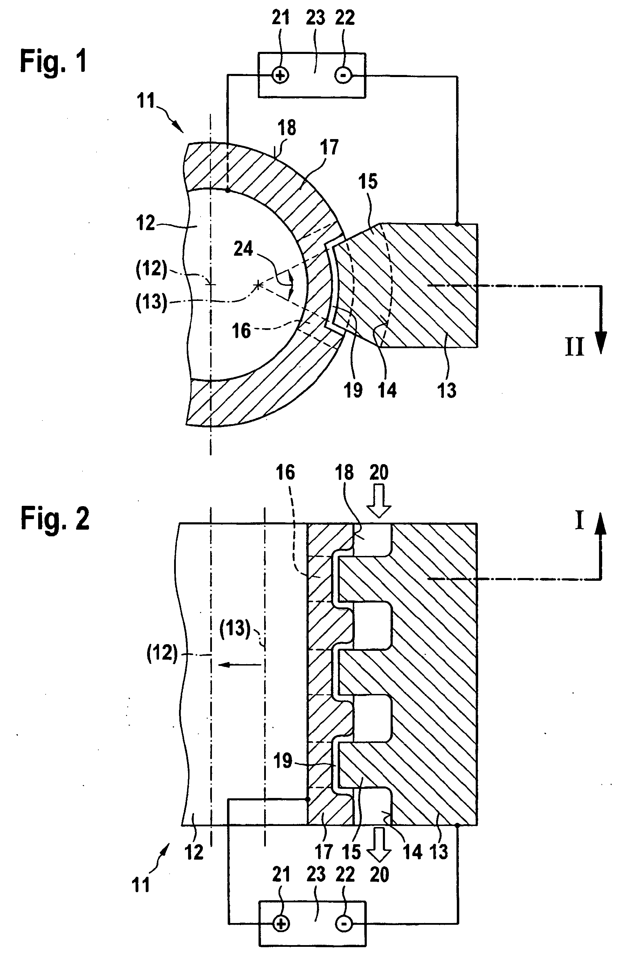

Da die Orientierung der Stempel-Profilierung 15 orthogonal zur Röhrchen-Außenmantelfläche sein soll, kann der dazu achsparallele hohlzylindrische Stempel 13 sich um das Röhrchen 12 herum nur über einen Sektorwinkel 24 von wesentlich weniger als 180° erstrecken, vgl. Fig.1. Nach Einbringen der Perforierung 16 in diesem Arbeitsabschnitt wird deshalb der Hohlstempel 13 zurückgefahren und das Röhrchen 12 um einen Winkel verdreht, der etwas kleiner als jener Sektorwinkel 24 ist; so dass eine Überlappung des neuen mit dem bisherigen Arbeitsabschnitt zu kontinuierlich durchgehenden peripheren Berandungen führt.

Sollte nach derart vollendetem Stent 11 noch eine Überarbeitung dessen Perforierung 16 wünschenswert sein, dann startet ein neuer Durchgang mit, gegenüber dem bisherigen; versetztem Sektorwinkel, um die achsparallelen Überlappungen der einander benachbarten Abschnitte noch schlichtend nachzuarbeiten, indem im neuen Durchgang die Bearbeitungs-Abschnitte auf die einander benachbarten Abschnittränder des bisherigen Durchganges gelegt werden.

Falls eine elektrolytische Beschichtung des - gemäß der Stempel-Profilierung 15 mit abgerundeten Kanten (vgl. Fig.2) - perforierten Röhrchen 12 gewünscht wird, etwa mit Material des Hohlstempels 13, braucht dazu lediglich unter Einbringen eines geeigneten galvanischen Elektrolyten in den Arbeitsspalt 19 die Polung etwa an der Gleichspannungsquelle 23 umgekehrt zu werden (in der Zeichnung nicht dargestellt), um nun den Hohlstempel 13 zur materiallliefernden Anode zu machen.

Das aus einem Röhrchen 12 durch Perforieren dessen Wandung 17 zu gewinnende Gittergerüst einer auch als Stent 11 bezeichneten medizintechnischen Gefäßstütze wird also nun unter Vermeiden von jeglichem Wärme- oder Krafteintrag in das Röhrchen 12 erfindungsgemäß im Wege des elektrochemischen Senkens ohne Nachbearbeitungserfordernisse, unmittelbar mit gratfrei abgerundeten Kanten, hergestellt. Dazu umgibt eine kathodische Senkerodierelektrode in Form eines profilierten Hohlstempels 13 einen achsparallelen Abschnitt der anodischen Röhrchen-Außenmantelfläche 18 unter Aufrechterhalten eines Arbeitsspaltes 19 zwischen beiden für eine Elektrolytströmung 20 zum Austragen der Metallionen aus der Wandung 17, woraufhin deren Perforierung 16 die Geometrie der Stempel-Profilierung 15 wiedergibt. Nach Perforieren dieses Abschnittes wird das Röhrchen 12 relativ zum Hohlstempel 13 um einen Winkel verdreht, der etwas kleiner als der Sektorwinkel 24 des Hohlstempels 13 ist, was durch einander überlappende Bearbeitungsabschnitte in peripherer Richtung kontinuierliche Perforierungsränder ergibt. Nach Abschluss des Perforierens des Röhrchens 12 kann die Polarität umgekehrt werden, um unter Zufuhr eines galvanischen Elektrolyten in den Arbeitsspalt 19 den nun kathodischen Stent 11 mit Material, insbesondere mit Magnesium, z.B. direkt vom nun anodischen Hohlstempel 13 zu beschichten.

### Bezugszeichenliste

- 11: Stent (aus 12 gefertigt)
- 12: Röhrchen
- (12): Symmetrieachse von 12
- 13: Hohlstempel (mit 15 entsprechend 16)
- (13): Achse zu Krümmungsradius von 13
- 14: Innenmantelfläche (von 13)
- 15: Profilierung (auf 14)
- 16: Perforierung (in 17)
- 17: Wandung (von 12)
- 18: Außenmantelfläche (von 17)
- 19: Arbeitsspalt (zwischen 14-18)
- 20: Elektrolytströmung (durch 19)
- 21: positiver Pol (von 23)
- 22: negativer Pol (von 23)
- 23: Gleichspannungsquelle
- 24: Sektorwinkel (von 14)

## Patentansprüche

1. Fertigungsverfahren für medizintechnische Gefäßstützen, so genannte Stents (11), durch Materialabtrag aus der Wandung (17) eines zu einer Netzstruktur zu perforierenden, elektrisch leitfähigen Röhrchens (12),
**dadurch gekennzeichnet,**
**dass** ein auf seiner hohlzylindrischen Innenmantelfläche (14) mit einer Profilierung (15) gemäß der zu erstellenden Perforierung (16) der RöhrchenWandung (17) ausgestatteter, zu dem Röhrchen (12) achsparallel orientierter, elektrisch leitender Hohlstempel (13) mit einem Sektorwinkel (24) von weniger als 180° unter Aufrechterhalten eines Arbeitsspaltes (19) zum Durchtritt einer Elektrolytströmung (20) orthogonal auf die Röhrchen-Außenmantelfläche (18) zu bewegt wird, während das Röhrchen (12) an den positiven Pol (21) und der Hohlstempel (13) an den negativen Pol (22) einer Gleichspannungsquelle (23) angeschossen sind.

2. Fertigungsverfahren nach dem vorangehenden Anspruch, **dadurch gekennzeichnet, dass** nach dem Einbringen der Perforierung (16) der Hohlstempel (13) zurückbewegt und relativ zum Röhrchen (12) um einen Winkel verdreht wird, der kleiner ais der Sektorwinkel (24) ist, ehe der dadurch erreichte weitere achsparallele Abschnitt der Röhrchen-Wandung (17) perforiert wird.

3. Fertigungsverfahren nach einem der vorangehenden Ansprüche, **dadurch gekennzeichnet, dass** es in einem neuen Durchgang mit Positionieren der Abschnitte auf die einander benachbarten Abschnitt-Ränder eines bisherigen Durchganges wiederholt wird.

4. Fertigungsverfahren nach einem der vorangehenden Ansprüche, **dadurch gekennzeichnet, dass** das Röhrchen (12) und der Hohlstempel (13) umgepolt werden und, unter Zufuhr eines galvanischen Elektrolyten in den Arbeitsspalt (19), mit Material vom Hohlstempel (13) eine galvanische Beschichtung des Röhrchens (12) erfolgt.

5. Fertigungsverfahren nach dem vorangehenden Anspruch, **dadurch gekennzeichnet, dass** das zum Stent (11) perforierte Röhrchen (12) mit Magnesium beschichtet wird.

## Claims

1. Production method for medical vascular supports, also called stents (11), by removal of material from the wall (17) of an electrically conductive tube (12) that is to be perforated to form a mesh structure, **characterized in that** an electrically conductive hollow punch (13), which is provided on its hollow cylindrical inner circumferential surface (14) with a profiling (15) according to the perforation (16) to be produced in the tube wall (17) and which is oriented axially parallel to the tube (12), is moved orthogonally towards the outer circumferential surface (18) of the tube with a sector angle (24) of less than 180° to maintain a working gap (19) for the passage of an electrolyte flow (20), while the tube (12) is connected to the positive pole (21) and the hollow punch (13) is connected to the negative pole (22) of a DC voltage source (23).

2. Production method according to the preceding claim, **characterized in that**, after the perforation (16) has been applied, the hollow punch (13) is moved back and is turned relative to the tube (12) by an angle smaller than the sector angle (24), before the further axially parallel portion of the tube wall (17) thus reached is perforated.

3. Production method according to one of the preceding claims, **characterized in that** it is repeated in a new pass, with the portions being positioned on the mutually adjacent portion edges of a previous pass.

4. Production method according to one of the preceding claims, **characterized in that** the tube (12) and the hollow punch (13) have their polarities reversed, and, with a galvanic electrolyte being introduced into the working gap (19), the tube (12) is coated galvanically with material from the hollow punch (13).

5. Production method according to the preceding claim, **characterized in that** the tube (12) perforated to form the stent (11) is coated with magnesium.

## Revendications

1. Procédé de fabrication de prothèses vasculaires médicales, également appelées stents (11), par enlèvement de matière de la paroi (17) d'un petit tube (12) à perforer pour obtenir une structure de réseau électriquement conducteur,
**caractérisé en ce**
**qu'**un poinçon creux (13) électriquement conducteur, muni sur sa surface d'enveloppe interne cylindrique creuse (14) d'un profilage (15) correspondant à la perforation (16) à effectuer de la paroi du petit tube (17), orienté avec son axe parallèle au petit tube (12), est déplacé avec un angle de secteur (24) inférieur à 180°, en maintenant une fente de travail (19) pour le passage d'un écoulement d'électrolyte (20), perpendiculairement vers la surface d'enveloppe extérieure du petit tube (18) tandis que le petit tube (12) est raccordé au pôle positif (21) et le poinçon creux (13) au pôle négatif (22) d'une source de tension continue (23).

2. Procédé de fabrication selon la revendication précédente, **caractérisé en ce qu'**après la réalisation de la perforation (16), le poinçon creux (13) est ramené en arrière et est tourné par rapport au petit tube (12) d'un angle inférieur à l'angle de secteur (24) avant que la portion supplémentaire d'axe parallèle de la paroi du petit tube (17) ainsi obtenue ne soit perforée.

3. Procédé de fabrication selon l'une quelconque des revendications précédentes, **caractérisé en ce qu'**il est répété au cours d'un nouveau passage avec positionnement des portions sur les bords de portions mutuellement adjacents d'un passage précédent.

4. Procédé de fabrication selon l'une quelconque des revendications précédentes, **caractérisé en ce que** l'on inverse les pôles du petit tube (12) et du poinçon creux (13) et, avec apport d'un électrolyte galvanique dans la fente de travail (19), il se produit un revêtement galvanique du petit tube (12) avec le matériau du poinçon creux (13).

5. Procédé de fabrication selon la revendication précédente, **caractérisé en ce que** le petit tube perforé (12) pour produire le stent (11) est revêtu de magnésium.
